# EUROPÄISCHE PATENTSCHRIFT

(11) **EP 1 473 511 B1**
(45) Veröffentlichungstag und Bekanntmachung des Hinweises auf die Patenterteilung: **05.12.2007**
(21) Anmeldenummer: 04010044.8
(22) Anmeldetag: 28.04.2004
(51) Int. Cl.: F16P 3/08, E05C 19/16

(54) **Zugangsschutzeinrichtung**
Device for protection of access
Dispositif de protection d'accès

(30) Priorität: 29.04.2003 DE 20306708 U
(43) Veröffentlichungstag der Anmeldung: 03.11.2004
(73) Patentinhaber: K.A. Schmersal Holding KG, 42279 Wuppertal (DE)
(72) Erfinder: Hoepken, Hermann, 45549 Sprockhövel (DE)
(74) Vertreter: Henseler, Daniela

(56) Entgegenhaltungen:
- DE-A1- 10 138 342
- DE-C2- 19 953 898
- DE-U1- 20 306 708
- US-A- 4 287 512
- US-A- 4 812 674

## Beschreibung

Die Erfindung betrifft eine Zugangsschutzeinrichtung nach dem Oberbegriff des Anspruchs 1.

Eine derartige Zugangsschutzeinrichtung ist aus der DE 199 53 898 C2 bekannt, bei der eine Zuhaltung mit einem durch ein Joch zu einem Magnetkreis schließbaren U-förmigen Magneten und einem zwischen den freien Enden des Magneten angeordneten Magnetfeldsensor vorgesehen ist. Mit dem Magnetfeldsensor ist feststellbar, ob zwischen den freien Enden ein Magnetfeld vorhanden ist oder nicht, d.h. ob der Magnetkreis und mithin ein zu überwachender Zugang geöffnet oder geschlossen ist. Bei einer nachlassenden Zuhaltekraft zwischen dem Magneten und dem Joch, wie sie z.B. durch Schwankungen der Betriebsspannung, erwärmungsbedingt ansteigendem Widerstand einer Spule des Magneten, einem Windungsschluss innerhalb der Magnetspule usw. auftreten können, ist jedoch das Magnetfeld zwischen den Schenkeln gering und liegt in der Praxis unterhalb eines für die Feststellung, ob die Tür geöffnet oder geschlossen ist, festzulegenden Schwellenwertes. Daher ist lediglich ein Öffnen der Tür, nicht jedoch ein dieser Betriebsstörung vorausgehender Abfall der effektiven Zuhaltekraft detektierbar. Eine sicherheitsgerichtete Detektion des Zustands der Schutzvorrichtung erfolgt somit erst nach der Überwindung der Zuhaltekraft des Magneten. Damit ist ein Schutz beispielsweise eines Bedieners einer zu sichernden Maschine gegen auslaufende Maschinenbewegungen nicht gegeben.

Der Erfindung liegt deshalb die Aufgabe zugrunde, eine Zugangsschutzeinrichtung nach dem Oberbegriff des Anspruchs 1 zu schaffen, die auch hier eine hohe Sicherheit bietet.

Diese Aufgabe wird entsprechend den Merkmalen des Anspruchs 1 gelöst.

Hierdurch wird eine Zugangsschutzeinrichtung mit einem feststehenden Teil wie z.B. einer Wand, wenigstens einem beweglichen Teil wie z.B. einer Schutztür, einer Zuhaltung mit einem Magnetkreis, der ein am beweglichen Teil befindliches magnetisierbares Joch sowie einen mit dem Joch schließbaren Magneten am feststehenden Teil aufweist, einem Magnetfeldsensor zum Erfassen des Magnetfelds außerhalb des Magnetkreises, und mit einem Sicherheitssensor, der eine am feststehenden Teil vorgesehene Sensoreinheit, die eine an einen Auswertekreis angeschlossene Spulenanordnung zum Senden und Empfangen eines hochfrequenten Signals aufweist, und einen am beweglichen Teil vorgesehenen Antwortsender umfaßt, geschaffen, bei der der Magnetfeldsensor zum Erfassen des Magnetfeldes außerhalb des Magnetkreises benachbart zu einer Kontaktfläche zwischen dem Magneten und dem Joch angeordnet ist.

Die zu einer Kontaktfläche benachbarte Anordnung ermöglicht aufgrund des dort am stärksten auftretenden Streufelds eine genaue Erfassung der vom Magneten tatsächlich ausgeübten Zuhaltekraft, die durch Schwankungen der Betriebsspannung, Temperaturänderungen, Wicklungsschlüsse in der Magnetspule, Verschmutzungen, Umgehungsversuche der Zuhaltefunktion od. dgl. abfallen kann. Ein schleichender Verlust der Zuhaltekraft kann daher bei bekannten Rahmenbedingungen durch Messung des Streufeldes erkannt werden, bevor es zu einem unkontrollierten Öffnen kommt. Die Steuerung kann bereits ein Wartungssignal erzeugen, wenn der Magnetfeldsensor eine noch ausreichende, aber nicht mehr die maximal erreichbare Zuhaltekraft signalisiert, so daß einer unkontrollierten Öffnung vorgebeugt werden kann.

Zweckmäßigerweise ist die Zuhaltekraft des Magneten steuerbar. Hierdurch ist die Zuhaltekraft an die tatsächlichen Betriebsbedingungen, z.B. Versorgungsspannung, Temperatur, Montagetoleranzen usw. anpassbar. Hierzu ist der Magnet vorzugsweise ein Elektromagnet mit einer Spule, deren Strom bzw. Spannung steuerbar ist. Die zur Beurteilung der Zuhaltekraft zu berücksichtigenden Rahmenbedingungen sind dabei der Spulenstrom oder die Spulenspannung. Zweckmäßigerweise sind hierzu Punkten auf oder Abschnitten der Strom-Spannungskennlinie Grenzwerte für das zuässige Streufeld zugeordnet.

Gegebenenfalls ist anstelle der Spule oder zusätzlich zu dieser ein Permanentmagnet vorgesehen, der drehbar zwischen zwei mit dem Joch in Kontakt bringbaren Abschnitten des Magneten angeordnet ist und dessen Drehwinkel die Stärke des Magneten beeinflußt.

Der Magnet kann auch ein Permanentmagnet mit einer Spule sein, deren Wirkung dem Magnetfeld des Permanenten entgegenwirkt. Die Zuhaltekraft wird dabei bei Aktivieren der Spule so stark verringert, daß ein Öffnen der Zuhaltung ermöglicht wird. Da Energie nicht zum Schließen, sondern zum Öffnen der Zuhaltung erforderlich ist, bleibt eine durch die Zuhaltung gesicherte Schutzeinrichtung auch bei einer Unterbrechung der Energieversorgung gesichert.

Vorzugsweise bilden die Steuerung, der Magnet und der Magnetfeldsensor einen Regelkreis, bei dem die Zuhaltekraft in Reaktion auf eine Änderung des vom Magnetfeldsensor detektierten Magnetfelds variiert wird. Hierdurch kann die Zuhaltekraft konstant auf einem Zielwert gehalten werden. Einem Nachlassen der effektiven Zuhaltekraft aufgrund von Manipulations- oder Öffnungsversuchen oder Änderung der Betriebsbedingungen wird dadurch dynamisch entgegengewirkt. Die Regelung der Zuhaltekraft erfolgt zweckmäßigerweise durch Regelung des der Spule zugeführten Stroms, gegebenenfalls auch durch die Lage eines drehbaren Permanentmagneten zwischen seinen Polschuhen.

Es können mehrere benachbart zueinander angeordnete Zuhaltungen vorgesehen sein, deren Magnete durch eine entsprechende Anzahl von Jochen oder von einem gemeinsamen Joch schließbar sind. Hierdurch sind hohe Zuhaltekräfte auch bei einer flachen Bauweise möglich.

Hierbei ist es zweckmäßig, daß weniger Magnetfeldsensoren und Ansteuerelektroniken als Zuhattungsmagnete vorgesehen sind. Zur Überwachung der Magnetfelder und zur gemeinsamen Stromregelung kann ein einziger Magnetfeldsensor zusammen mit einer Ansteuerelektronik genügen. Hierdurch sind eine kostengünstige Herstellung der Zugangsschutzeinrichtung und eine vereinfachte Auswertung der Signale möglich.

Die Zuhaltungen sind dabei zweckmäßigerweise in Reihe geschaltet. Hierdurch fließt im Gegensatz zu einer Parallelschaltung durch alle Magnete stets der selbe Strom. Hierzu kann eine zweckmäßigerweise in die Steuerung integrierte regelbare Konstantstromquelle vorgesehen sein, wodurch sich zudem eine weitestgehende Unabhängigkeit von der jeweils verfügbaren Versorgungsspannung ergibt.

Ferner kann zwischen dem feststehenden und dem beweglichen Teil ein Magnetsnapper mit einem Permanentmagneten und einem Gegenstück vorgesehen sein. Hierdurch verbleibt auch bei deaktivierter Zuhaltung eine geringe Restzuhaltekraft zwischen den beiden Teilen.

Der Magnet, das Joch, die Sensoreinheit, der Antwortsender, der Permanentmagnet des Magnetsnappers und/oder das Gegenstück des Magnetsnappers können jeweils von einem Gehäuse mit insbesondere rechteckigem oder wabenförmigem Querschnitt umgeben sein. Dadurch können diese Bauteile einfach aneinandergereiht werden. Es ergeben sich eine Montageerleichterung und zudem eine durchgängige Oberfläche.

Weitere Ausgestaltungen der Erfindung sind der nachfolgenden Beschreibung und den Unteransprüchen zu entnehmen.

Die Erfindung wird nachstehend anhand der in den beigefügten Figuren dargestellten Ausführungsbeispiele näher erläutert.
Fig. 1 zeigt eine Zugangsschutzeinrichtung.
Fig. 2 zeigt ein Blockschaltbild einer Zugangsschutzeinrichtung.
Fig. 3a und 3b zeigen verschiedene Zuhaltungen.
Fig. 4a, 4b und 4c illustrieren das Magnetfeld im Magnetkreis einer Zuhaltung für verschiedene Abstände zwischen Magnet und Joch.
Fig. 5 zeigt eine Zugangsschutzeinrichtung mit mehreren Zuhaltungen.

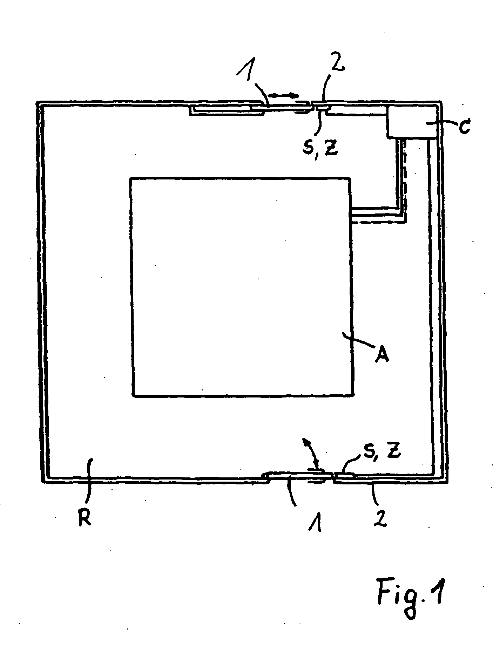

Fig. 1 zeigt eine Zugangsschutzeinrichtung für einen begehbaren, verschließbaren Raumbereich R einer maschinellen Anlage A, bei der es sich beispielsweise um eine Fleischwürfelmaschine handeln kann. Der Raumbereich R ist über mehrere Türen 1 als bewegliche Teile gegenüber feststehenden Wänden 2 als feststehendem Teil zugänglich. Die Türen 1 können hier durch Schwenken bzw. Schieben geöffnet und geschlossen werden. Zwischen den Türen 1 und einer benachbarten Wand 2 befindet sich jeweils ein Sicherheitssensor S und eine Zuhaltung Z für die Tür 1. Außerdem ist eine Steuerung C vorgesehen, die mit der maschinellen Anlage A und den Sicherheitssensoren S gekoppelt ist, um die Zuhaltungen Z entsprechend dem Betriebszustand der maschinellen Anlage A zum Öffnen der Türen 1 freizugeben bzw. zu sperren. Wenn der Steuerung C ein Stillstehen der beweglichen Teile der maschinellen Anlage A etwa über Stillstandswächter signalisiert wird, gibt sie die Zuhaltungen Z frei, so daß der Raumbereich R durch Öffnen der Türen 1 begehbar wird. Stehen zumindest Teile der maschinellen Anlage nicht still oder sind ansonsten vorzunehmende Vorkehrungen vor dem Öffnen der Türen 1 noch nicht getroffen, werden die Zuhaltungen Z blockiert, so daß die Türen nicht geöffnet werden können Außerdem verhindert die Steuerung C ein Inbetriebnehmen der maschinellen Anlage A bei wenigstens einer geöffneten Tür.

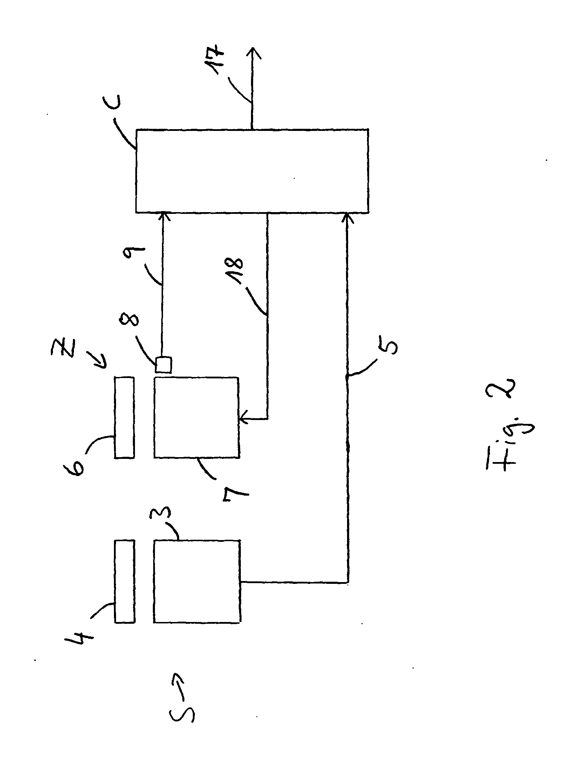

Wie in Fig. 2 dargestellt umfaßt der Sicherheitssensor S eine am feststehenden Teil vorgesehene Sensoreinheit 3, die eine an einen Auswertekreis angeschlossene Spulenanordnung zum Senden und Empfangen eines hochfrequenten Signals aufweist, und einen am beweglichen Teil vorgesehenen Antwortsender 4. Der Antwortsender 4 kann dabei ein an sich bekannter zweckmäßigerweise passiver und kodierter Transponder sein. Stellt die Sensoreinheit 3 ein Antwortsignal des Antwortsenders 4 mit erwarteter Kodierung fest, erzeugt sie ein entsprechendes Signal 5 für die Steuerung C. Die Sensoreinheit 3 kann statt dessen auch das Antwortsignal an die Steuerung C weiterleiten, die die Überprüfung der Kodierung intern vornimmt.

Die Zuhaltung Z umfaßt einen Magnetkreis, der ein am beweglichen Teil befindliches magnetisierbares Joch 6 sowie einen mit dem Joch 6 schließbaren Magneten 7 am feststehenden Teil aufweist. Ein Magnetfeldsensor 8 in Form eines Hallsensors, einer Feldplatte od. dgl. ist zum Erfassen des Magnetfelds außerhalb des Magnetkreises benachbart zu einer Kontaktfläche zwischen dem Magneten 7 und dem Joch 6 angeordnet und liefert ein Signal 9 an die Steuerung C, das der Stärke des erfaßten Magnetfelds entspricht.

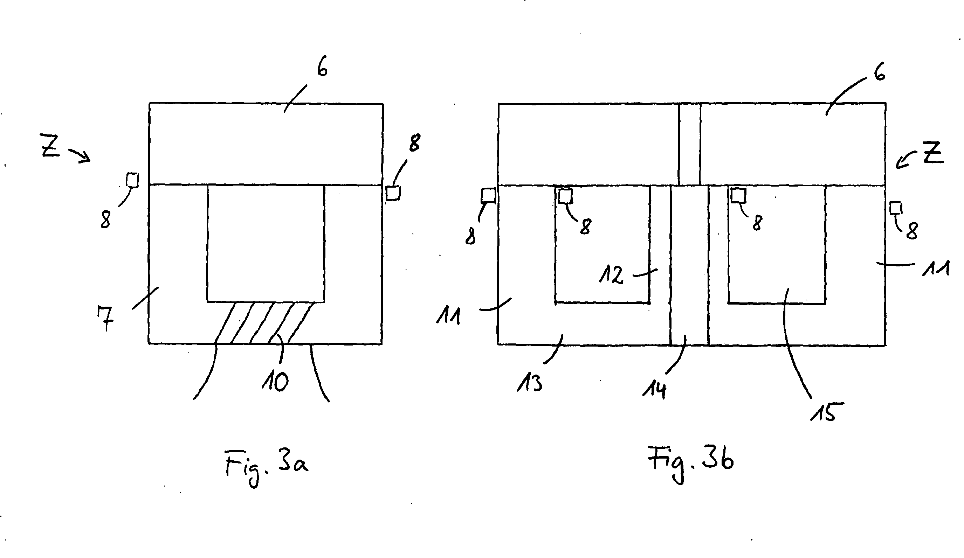

Der Magnet 7 kann dabei wie in Fig. 3a gezeigt ein U-Magnet sein, der zumindest teilweise mit einer Spule 10 umwickelt sein kann. Die Spule 10 ist durch die Steuerung C ein- und ausschaltbar, um den Magneten 7 ein- bzw. auszuschalten. Benachbart zu einer Kontaktfläche zwischen dem Magneten 7 und dem Joch 6 ist der Magnetfeldsensor 8 angeordnet.

Der Magnet 7 kann auch wie in Fig. 3b gezeigt ein im Schnitt Doppel-U-förmiger Ringmagnet mit einer Außenwandung 11 und einer hierzu konzentrischen Innenwandung 12, die durch eine Bodenplatte 13 miteinander verbunden sind, sowie einer sich vorzugsweise mittig entlang der Längsachse durch die Innenwandung 12 und die Bodenplatte 13 erstreckenden Montageöffnung 14 sein. Zwischen der Außen- und der Innenwandung 11, 12 ist eine um die Längsachse gewickelte Spule 15 angeordnet, die zweckmäßigerweise mit dem Ringmagneten zu einer Einheit vergossen ist. Der Magnetfeldsensor 8 ist beispielhaft an mehreren geeigneten Positionen dargestellt.

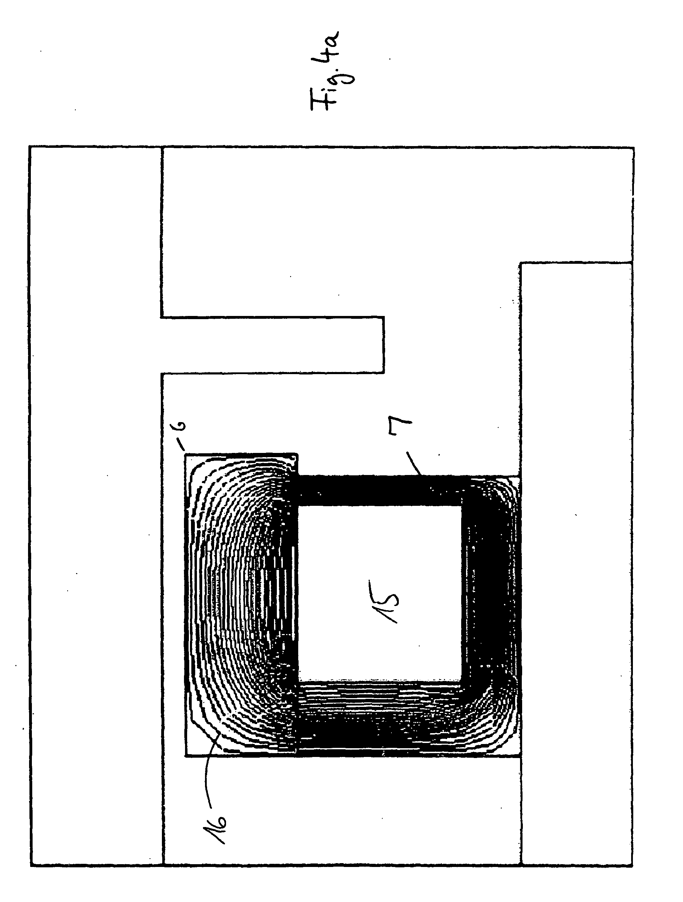

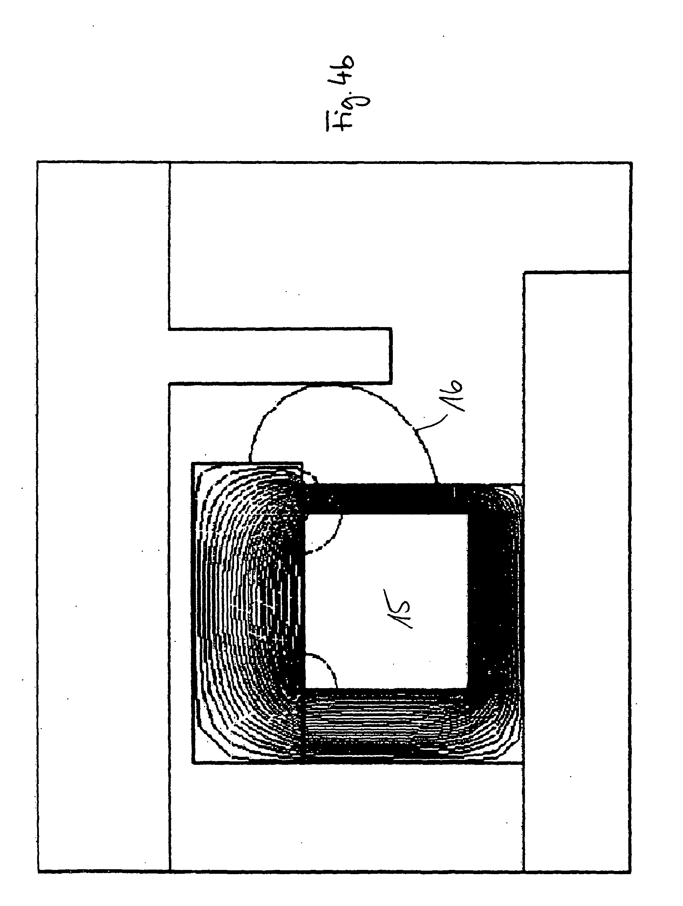

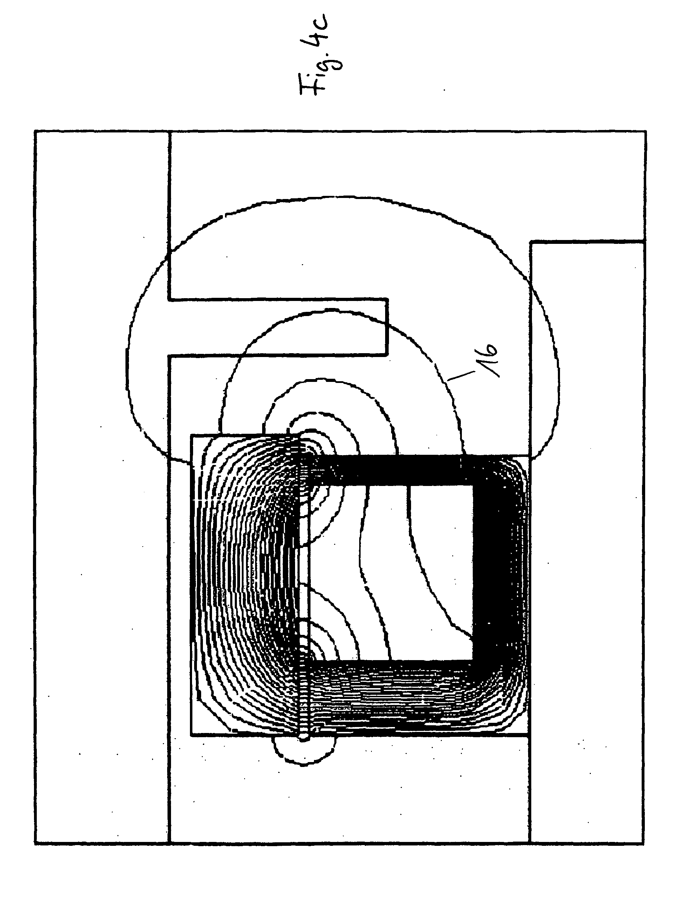

Fig. 4a zeigt den Feldlinienverlauf durch einen Abschnitt eines Ringmagneten bei einem fast vollständig geschlossenen Magnetkreis mit einem Luftspalt zwischen dem Magneten 7 und dem Joch 6 von 0,01 mm. Ersichtlich verlaufen die Feldlinien 16 ringförmig um die Windungen der Spule 15 und innerhalb des Magnetkreises. Ein Streufeld ist nicht erkennbar. Vergrößert sich der Luftspalt, beispielsweise, weil sich ein Fremdkörper zwischen Magnet 7 und Joch 6 befindet, gegen die Tür 1 eine der Zuhaltekraft des Magneten 7 entgegenwirkende Kraft ausgeübt wird oder die Zuhaltekraft aufgrund von Änderungen der Betriebsbedingungen abfällt, wird benachbart zu den einander gegenüberliegenden Kontaktflächen des Jochs 6 und des Magneten 7 ein Streufeld detektierbar, wie dies in Fig. 4b beispielhaft für einen kleinen Luftspalt von 0,1 mm dargestellt ist. Das Streufeld ist einem größeren Luftspalt auch in deutlicher Entfernung von den Kontaktflächen detektierbar, vgl. Fig. 4c für einen Luftspalt von 1 mm.

Die Anordnung des Magnetfeldsensors 8 benachbart zu einer Kontaktfläche stellt somit sicher, daß bereits ein kleiner Luftspalt durch die Steuerung C erkannt werden kann. Zu diesem Zweck wertet die Steuerung C das Signal 9 des Magnetfeldsensors 8 beispielsweise durch Vergleich mit einem Schwellenwert aus und stellt fest, ob der Luftspalt im Rahmen der vorgegebenen Toleranzen ist oder ob die Tür 1 geöffnet worden ist. Nur wenn das Signal 9 eine geschlossene Tür 1 und gleichzeitig das Signal 5 der Sensoreinheit 3 einen korrekten Antwortsender 4 signalisieren, liefert die Steuerung C ein Freigabesignal 17, das die Einschaltbarkeit bzw. den weiteren Betrieb der maschinellen Anlage A ermöglicht.

Die Steuerung C kann, wenn das Signal 9 zwar eine ausreichende, aber nicht die maximale Zuhaltekraft signalisiert, ein Wartungssignal ausgeben, damit die Zuhaltung Z bei der nächsten Gelegenheit überprüft werden kann, so daß einem möglichen Stillsetzen der maschinellen Anlage A vorgebeugt wird.

Die Steuerung C kann auch die Zuhaltekraft des Magneten 7 regeln, indem sie beispielsweise den der Spule 15 zugeführten Strom 18 regelt, vgl. Fig. 2. Hierbei kann ein Abfall der Zuhaltekraft, der durch das Signal 9 erfaßt wird, kompensiert werden.

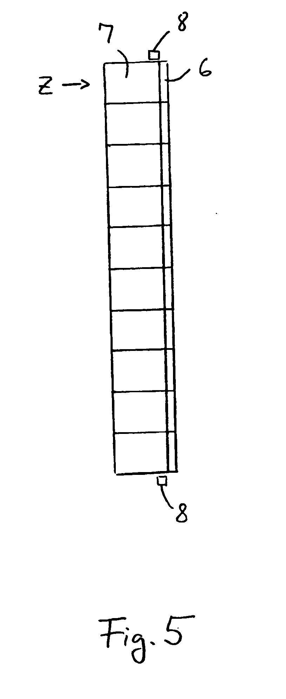

Insbesondere für eine flache Bauweise für Türen od. dgl. können anstelle einer großen Zuhaltung Z mehrere kleine Zuhaltungen Z vorgesehen sein, die beispielsweise in würfelförmigen Gehäusen benachbart zueinander angeordnet sind, vgl. Fig. 5. Hierbei sind vorzugsweise weniger Magnetfeldsensoren 8 vorgesehen, als Zuhaltungen Z. Im dargestellten Beispiel sind zehn zu einer Reihe zusammengefügte Zuhaltungen Z und nur zwei Magnetfeldsensoren 8 vorgesehen, die jeweils der am Ende der Reihe angeordneten Zuhaltung Z zugeordnet sind. Zur Auswertung kann die Steuerung C eine Oder-Verknüpfung der Signale der einzelnen Magnetdfeldsensoren 8 durchführen, so daß ein Stillsetzen der maschinellen Anlage bzw. ein Nachregeln der Zuhaltekraft bereits dann erfolgt, wenn einer der Magnetfeldsensoren 8 einen Abfall der effektiven Zuhaltekraft signalisiert.

Die Auswertung der Signale 5, 9 in der Steuerung C erfolgt dabei stets sicherheitsgerichtet. Zweckmäßigerweise werden hierfür zwei einander überprüfende Mikrocontroller verwendet. Zudem können die Magnetfeldsensoren 8 redundant vorgesehen sein oder dynamisch überprüft werden.

## Patentansprüche

1. Zugangsschutzeinrichtung für einen Raumbereich (R) mit einer Maschine oder maschinellen Anlage (A), deren Abschaltung und Einschaltbarkeit über eine Steuerung (C) steuerbar ist, umfassend einen feststehenden Teil (2) sowie wenigstens einen beweglichen Teil (1) zum Verschließen einer Zugangsöffnung, eine Zuhaltung (Z) mit einem Magnetkreis, der ein am beweglichen Teil (1) befindliches magnetisierbares Joch (6) sowie einen mit dem Joch (6) schließbaren Magneten (7) am feststehenden Teil (2) aufweist, einen Magnetfeldsensor (8) zum Erfassen des Magnetfelds außerhalb des Magnetkreises, und einen Sicherheitssensor (S), der eine am feststehenden Teil (2) vorgesehene Sensoreinheit (3), die eine an einen Auswertekreis angeschlossene Spulenanordnung zum Senden und Empfangen eines hochfrequenten Signals aufweist, und einen am beweglichen Teil (1) vorgesehenen Antwortsender (4) umfaßt, wobei das Öffnen der Zuhaltung (Z) in Abhängigkeit vom Betriebszustand der Maschine oder der maschinellen Anlage (A) vornehmbar bzw. gesperrt ist, **dadurch gekennzeichnet, daß** der Magnetfeldsensor (8) zum Erfassen des Magnetfeldes außerhalb des Magnetkreises benachbart zu einer Kontaktfläche zwischen dem Magneten (7) und dem Joch (6) angeordnet ist.

2. Zugangsschutzeinrichtung nach Anspruch 1, **dadurch gekennzeichnet, daß** die Zuhaltekraft des Magneten (7) durch die Steuerung (C) steuerbar ist.

3. Zugangsschutzeinrichtung nach Anspruch 1 oder 2, **dadurch gekennzeichnet, daß** die Steuerung (C), der Magnet (7) und der Magnetfeldsensor (8) einen Regelkreis für die Zuhaltekraft bilden.

4. Zugangsschutzeinrichtung nach einem der Ansprüche 1 bis 3, **dadurch gekennzeichnet, daß** die Steuerung (C) zum Erzeugen eines Wartungssignals ausgestaltet ist, wenn der Magnetfeldsensor (8) eine zwar noch ausreichende, aber nicht die maximal mögliche Zuhaltekraft signalisiert.

5. Zugangsschutzeinrichtung nach einem der Ansprüche 1 bis 4, **dadurch gekennzeichnet, daß** mehrere Zuhaltungen (Z) vorgesehen sind.

6. Zugangsschutzeinrichtung nach Anspruch 5, **dadurch gekennzeichnet, daß** weniger Magnetfeldsensoren (8) als Zuhaltungen (Z) vorgesehen sind.

7. Zugangsschutzeinrichtung nach einem der Ansprüche 1 bis 6, **dadurch gekennzeichnet, daß** nur ein Magnetfeldsensor (8) vorgesehen ist.

8. Zugangsschutzeinrichtung nach einem der Ansprüche 5 bis 7, **dadurch gekennzeichnet, daß** die Zuhaltungen (Z) in Reihe geschaltet sind.

9. Zugangsschutzeinrichtung nach einem der Ansprüche 1 bis 8, **dadurch gekennzeichnet, daß** zwischen dem feststehenden und dem beweglichen Teil (2, 1) ein Magnetsnapper mit einem Permanentmagneten und einem Gegenstück vorgesehen ist.

10. Zugangsschutzeinrichtung nach einem der Ansprüche 1 bis 9, **dadurch gekennzeichnet, daß** der Magnet (7), das Joch (6), die Sensoreinheit (3), der Antwortsender (4), der Permanentmagnet des Magnetsnappers und/oder das Gegenstück des Magnetsnappers jeweils von einem Gehäuse umgeben ist.

11. Zugangsschutzeinrichtung nach Anspruch 9, **dadurch gekennzeichnet, daß** mehrere Gehäuse aneinanderreihbar sind.

12. Zugangsschutzeinrichtung nach Anspruch 10 oder 11, **dadurch gekennzeichnet, daß** die Gehäuse einen rechteckigen oder wabenförmigen Querschnitt haben.

## Claims

1. Access safety device for a zone (R) with a machine or machine-based equipment (A), the switching off and ability to switch on of which device is controllable by a control means (C), which device comprises a fixed part (2) and at least one movable part (1) for closing an access opening; a closure-maintaining means (Z) having a magnetic circuit, which comprises a magnetisable yoke (6) located on the movable part (1) and a magnet (7), closable by means of the yoke (6), on the fixed part (2); a magnetic field sensor (8) for ascertaining the magnetic field outside the magnetic circuit; and a safety sensor (S), which comprises a sensor unit (3) provided on the fixed part (2), the sensor unit having a coil arrangement, connected to an evaluation circuit, for sending and receiving a high-frequency signal, and which includes a transponder (4) provided on the movable part (1), wherein opening of the closure-maintaining means (Z) is executable or blocked as a function of the operational state of the machine or of the machine-based equipment (A), **characterised in that** the magnetic field sensor (8) for ascertaining the magnetic field outside the magnetic circuit is arranged adjacent to a contact face between the magnet (7) and the yoke (6).

2. Access safety device according to claim 1, **characterised in that** the closure maintenance force of the magnet (7) is controllable by the control means (C).

3. Access safety device according to claim 1 or 2, **characterised in that** the control means (C), the magnet (7) and the magnetic field sensor (8) form a control circuit for the closure maintenance force.

4. Access safety device according to any one of claims 1 to 3, **characterised in that** the control means (C) is arranged to generate a service signal when the magnetic field sensor (8) signals a closure maintenance force that, although still adequate, is not the maximum possible.

5. Access safety device according to any one of claims 1 to 4, **characterised in that** a plurality of closure-maintaining means (Z) are provided.

6. Access safety device according to claim 5, **characterised in that** fewer magnetic field sensors (8) than closure-maintaining means (Z) are provided.

7. Access safety device according to any one of claims 1 to 6, **characterised in that** only one magnetic field sensor (8) is provided.

8. Access safety device according to any one of claims 5 to 7, **characterised in that** the closure-maintaining means (Z) are series-connected.

9. Access safety device according to any one of claims 1 to 8, **characterised in that** there is provided, between the fixed part and the movable part (2, 1), a magnetic snap closure having a permanent magnet and a counter-element.

10. Access safety device according to any one of claims 1 to 9, **characterised in that** the magnet (7), the yoke (6), the sensor unit (3), the transponder (4), the permanent magnet of the magnetic snap closure and/or the counter-element of the magnetic snap closure are each surrounded by a housing.

11. Access safety device according to claim 9, **characterised in that** a plurality of housings are arrangeable in a line.

12. Access safety device according to claim 10 or 11, **characterised in that** the housings have a rectangular or honeycomb-like cross-section.

## Revendications

1. Dispositif de protection d'accès destiné à une zone spatiale (R) avec une machine ou une installation automatisée (A), dont la désactivation et la possibilité d'activation peuvent être commandées par une commande (C), comportant un élément fixe (2) ainsi qu'au moins un élément mobile (1) permettant de fermer une ouverture d'accès, une gâchette (Z) avec un circuit magnétique, qui présente une culasse (6) magnétisable, se trouvant sur l'élément mobile (1) ainsi qu'un aimant (7), pouvant être fermé à l'aide de la culasse (6) et se trouvant sur l'élément fixe (2), un capteur de champ magnétique (8) permettant de détecter le champ magnétique en dehors du circuit magnétique, et un capteur de sécurité (S), qui comporte une unité de capteur (3) prévue sur l'élément fixe (2), laquelle unité de capteur présente un agencement de bobines relié à un circuit d'évaluation afin d'envoyer et de recevoir un signal haute fréquence, et un émetteur de réponse (4) prévu sur l'élément mobile (1), moyennant quoi l'ouverture de la gâchette (Z) peut être réalisée ou bloquée en fonction de l'état de fonctionnement de la machine ou de l'installation automatisée (A), **caractérisé en ce que** le capteur de champ magnétique (8), permettant de détecter le champ magnétique en dehors du circuit magnétique, est disposé de manière adjacente à une surface de contact entre l'aimant (7) et la culasse (6).

2. Dispositif de protection d'accès selon la revendication 1, **caractérisé en ce que** la force de maintien de l'aimant (7) peut être commandée par la commande (C).

3. Dispositif de protection d'accès selon la revendication 1 ou 2, **caractérisé en ce que** la commande (C), l'aimant (7) et le capteur de champ magnétique (8) forment un circuit régulateur pour la force de maintien.

4. Dispositif de protection d'accès selon l'une quelconque des revendications 1 à 3, **caractérisé en ce que** la commande (C) est configurée de manière à produire un signal de surveillance lorsque le capteur de champ magnétique (8) signale une force de maintien certes encore suffisante, mais qui n'est pas la plus élevée possible.

5. Dispositif de protection d'accès selon l'une quelconque des revendications 1 à 4, **caractérisé en ce que** plusieurs gâchettes (Z) sont prévues.

6. Dispositif de protection d'accès selon la revendication 5, **caractérisé en ce que** moins de capteurs de champ magnétique (8) sont prévus que de gâchettes (Z).

7. Dispositif de protection d'accès selon l'une quelconque des revendications 1 à 6, **caractérisé en ce que** seul un capteur de champ magnétique (8) est prévu.

8. Dispositif de protection d'accès selon l'une quelconque des revendications 5 à 7, **caractérisé en ce que** les gâchettes (Z) sont montées en série.

9. Dispositif de protection d'accès selon l'une quelconque des revendications 1 à 8, **caractérisé en ce que**, entre l'élément fixe (2) et l'élément mobile (1), il est prévu un aimant à action brusque comportant un aimant permanent et son pendant.

10. Dispositif de protection d'accès selon l'une quelconque des revendications 1 à 9, **caractérisé en ce que** l'aimant (7), la culasse (6), l'unité de capteur (3), l'émetteur de réponse (4), l'aimant permanent de l'aimant à action brusque et/ou le pendant de l'aimant à action brusque sont respectivement entourés par un boîtier.

11. Dispositif de protection d'accès selon la revendication 9, **caractérisé en ce que** plusieurs boîtiers peuvent être montés l'un à la suite de l'autre.

12. Dispositif de protection d'accès selon la revendication 10 ou 11, **caractérisé en ce que** le boîtier a une section rectangulaire ou en forme d'alvéole.
